# FASCICULE DE BREVET EUROPEEN

(11) **EP 1 127 729 B1**
(45) Date de publication et mention de la délivrance du brevet: **15.12.2004**
(21) Numéro de dépôt: 01400435.2
(22) Date de dépôt: 19.02.2001
(51) Int. Cl.: B60K 37/02, B62D 1/18

(54) **Agencement de planche de bord de véhicule automobile**
Armaturenbrettanordnung in Kraftfahrzeugen
Dashboard arrangement in motor vehicles

(30) Priorité: 22.02.2000 FR 0002196
(43) Date de publication de la demande: 29.08.2001
(73) Titulaire: Faurecia Industries, 92100 Boulogne-Billancourt (FR)
(72) Inventeur: Bonnot, David, 25700 Valentigney (FR)
(74) Mandataire: Habasque, Etienne Joel Jean-François

(56) Documents cités:
- DE-A- 3 801 485
- DE-U- 29 521 414
- FR-A- 2 732 661

## Description

La présente invention concerne un agencement de planche de bord de véhicule automobile.

Plus particulièrement, l'invention concerne un tel agencement qui comporte un bloc formant combiné d'instrumentation du véhicule et un ensemble de colonne de direction de celui-ci déplaçable angulairement et axialement par rapport au reste de la planche, pour permettre un réglage de la position du volant de direction du véhicule.

Le document DE 38 01 485 A divulgue un agencement de planche de bord selon le préambule de la revendication 1.

On connaît déjà dans l'état de la technique, des agencements de ce type dans lesquels le bloc formant combiné d'instrumentation est intégré à la planche de bord en un emplacement déterminé de celui-ci.

Cependant, ces agencements présentent un certain nombre d'inconvénients notamment de visibilité de ce bloc formant combiné d'instrumentation, car le volant de direction peut, selon sa position, masquer tout ou partie de ce combiné.

Différentes solutions ont déjà été proposées pour tenter de résoudre ces problèmes.

Cependant, ces solutions ne sont applicables que lorsque l'ensemble de colonne de direction est réglable uniquement en position angulaire.

FR 2 732 661 concerne un dispositif de réglage en position de la colonne de direction et du tableau de bord d'un véhicule automobile.

Ce dispositif comprend un organe de liaison entre la colonne de direction et le tableau de bord.

Cet organe de liaison transmet les déplacements axiaux de la colonne de direction au tableau de bord.

Dans la forme de réalisation unique représentée et décrite, l'organe de liaison comprend une tablette constitutive du tableau de bord et une extrémité libre de la tablette solidaire en translation avec la colonne de direction.

En outre, le dispositif décrit dans ce document comprend des moyens pour réaliser le déplacement angulaire de la colonne de direction et du tableau de bord.

Le but de ce dispositif est d'assurer simultanément le déplacement axial et angulaire du tableau de bord avec la colonne de direction.

L'inconvénient majeur de cet agencement lors d'un accident résulte de la liaison rigide entre le tableau de bord et la colonne de direction formée par la tablette et l'extrémité libre de celle-ci, solidaire en translaton avec la colonne de direction. En effet, en cas de choc important, dans un premier temps, cette liaison rigide peut sensiblement modifier le mouvement sécuritaire prévu de déplacement axial et de remontée de la colonne et dans un deuxième temps, la rupture de la liaison rigide risque d'entrainer des projections de matière dans l'habitacle du véhicule.

Le but de l'invention est donc de résoudre ces problèmes.

A cet effet, l'invention a pour objet un agencement de planche de bord de véhicule automobile, du type comportant un bloc formant combiné d'instrumentation du véhicule et un ensemble de colonne de direction de celui-ci déplaçable angulairement et axialement par rapport au reste de la planche de bord pour permettre un réglage de la position du volant de direction du véhicule, caractérisé en ce que le bloc formant combiné d'instrumentation du véhicule comporte des moyens d'articulation sur le reste de la structure de la planche et une surface inférieure formant talon d'appui sur une surface de contact et de glissement complémentaire de l'ensemble de colonne, pour suivre les déplacements angulaires de celui-ci lors des réglages en position correspondants du volant tout en restant fixe en position lors des réglages en position axiale de celui-ci.

L'invention sera mieux comprise à l'aide de la description qui va suivre donnée uniquement à titre d'exemple et faite en se référant aux dessins annexés sur lesquels :
- la figure 1 représente une vue en coupe d'un agencement de planche de bord selon l'invention ; et
- les figures 2, 3 et 4 représentent des vues de côté illustrant le réglage en position d'un volant entrant dans la constitution d'un tel agencement.

On a en effet représenté sur ces figures, un agencement de planche de bord de véhicule automobile qui comporte un bloc formant combiné d'instrumentation du véhicule, désigné par la référence générale 1.

Ce combiné présente alors différents moyens d'affichage d'informations, de type classique, au conducteur du véhicule.

De plus, cet agencement comporte un ensemble de colonne de direction du véhicule, désigné par la référence générale 2, déplaçable angulairement et axialement par rapport au reste de la planche de bord pour permettre un réglage de la position d'un volant de direction de ce véhicule, désigné par la référence générale 3 et porté par cet ensemble de colonne, dans l'habitacle pour l'adapter à la morphologie du conducteur du véhicule.

Cet ensemble de colonne comporte de façon classique un arbre de direction, dont une extrémité est adaptée pour porter le volant de direction désigné par la référence générale 3 et dont une autre extrémité est adaptée pour être reliée au reste du mécanisme de direction du véhicule.

Cet ensemble de colonne comporte également de façon classique une structure de fixation 4 sur une pièce d'armature de la planche de bord désignée par la référence générale 5 sur cette figure.

Cette pièce d'armature est par exemple formée par une poutre transversale de renfort de la planche de bord munie de flasques par exemple 6 et 7 de fixation de l'ensemble de colonne.

De façon classique également, cet ensemble de colonne est monté déplaçable en positions angulaire et axiale pour permettre un réglage de la position angulaire et axiale du volant.

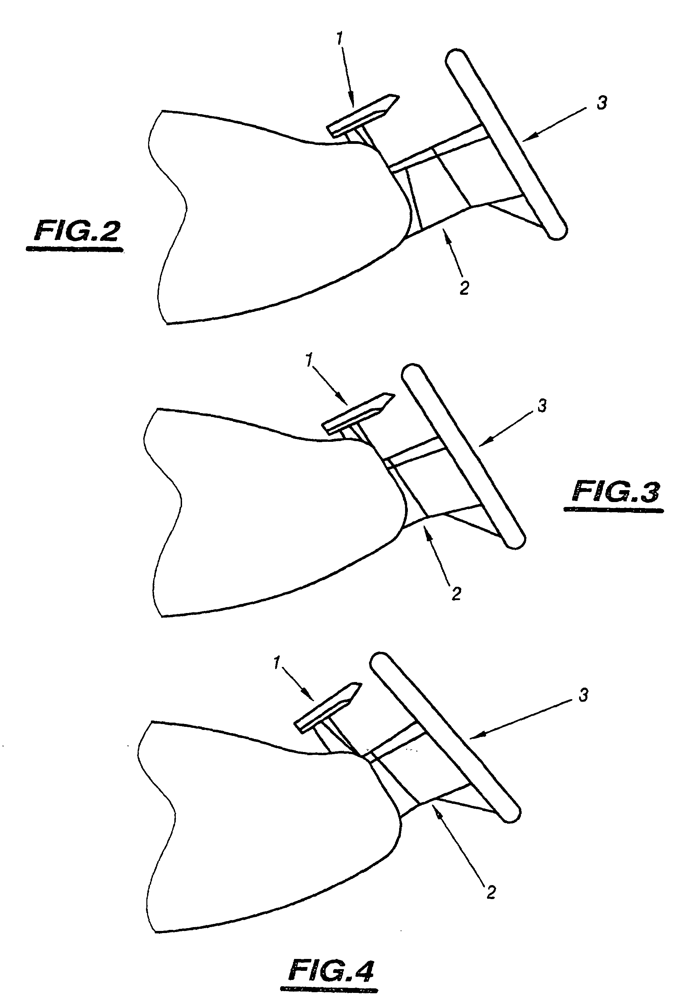

Selon l'invention, le bloc formant combiné d'instrumentation 1 comporte des moyens 8 d'articulation sur le reste de la structure de la planche de bord et une surface inférieure désignée par la référence générale 9, formant talon d'appui sur une surface de contact et de glissement complémentaire 10 de l'ensemble de colonne, ce qui permet à ce combiné de suivre les déplacements de l'ensemble de colonne lors des réglages en position angulaire du volant tout en restant fixe en position lors des réglages en position axiale de celui-ci, comme cela est illustré sur les figures 2, 3 et 4.

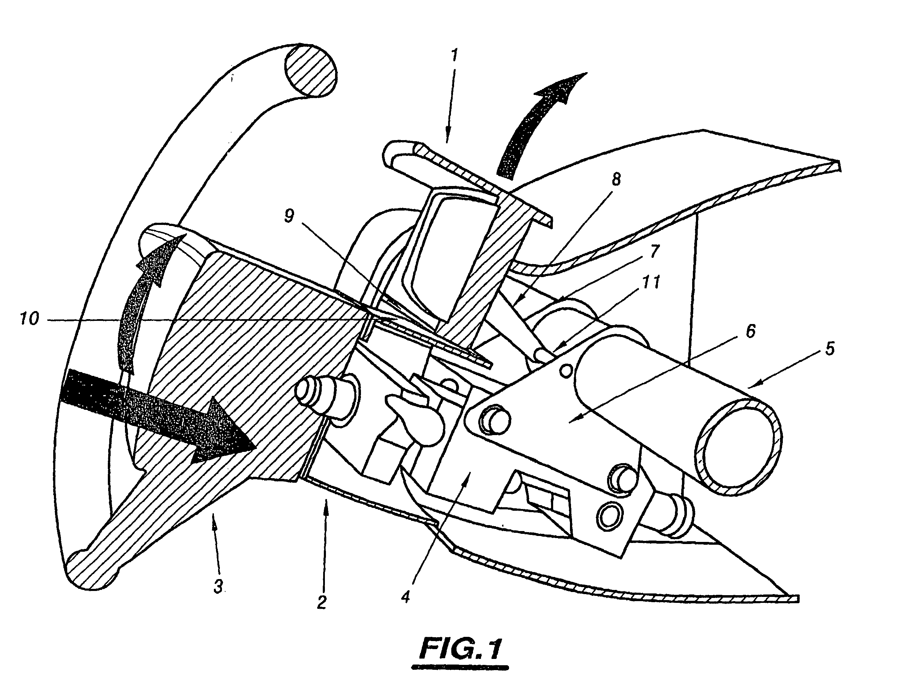

Dans l'exemple de réalisation représenté sur la figure 1, les moyens d'articulation du combiné d'instrumentation 1 sur le reste de la structure de la planche de bord comprennent par exemple une patte d'articulation 8 dont une extrémité est associée à la face arrière du combiné d'instrumentation 1 et dont une autre extrémité est associée, par exemple, à une tige d'articulation 11 s'étendant entre les flasques 6 et 7 de la poutre transversale 5 de la planche de bord.

Bien entendu, le bloc formant combiné d'instrumentation peut être disposé dans un logement correspondant de la structure de la planche de bord et dans ce cas là, celle-ci comporte des moyens d'habillage du bord de ce logement pour assurer l'esthétique de l'intégration de ce bloc dans cette structure.

De même, des moyens élastiques de sollicitation de ce bloc formant combiné contre l'ensemble de colonne, peuvent être envisagés.

Ceux-ci permettent alors d'éviter par exemple des sauts du bloc formant combiné lors du roulage du véhicule.

Ces moyens comprennent par exemple un ressort hélicoïdal intégré aux moyens d'articulation du combiné sur le reste de la structure de la planche.

Bien entendu, différents modes de réalisation de cet agencement peuvent être envisagés.

## Revendications

1. Agencement de planche de bord de véhicule automobile, du type comportant un bloc (1) formant combiné d'instrumentation du véhicule et un ensemble (2) de colonne de direction de celui-ci, déplaçable angulairement et axialement par rapport au reste de la planche, pour permettre un réglage de la position du volant de direction du véhicule, le bloc (1) formant combiné d'instrumentation du véhicule comportant des moyens (8) d'articulation sur le reste de la structure de la planche, **caractérisé en ce que** le bloc (1) formant combiné d'instrumentation comporte une surface inférieure (9) formant talon d'appui sur une surface (10) de contact et de glissement complémentaire de l'ensemble de colonne (2), pour suivre les déplacements angulaires de celui-ci lors des réglages correspondants du volant tout en restant fixe en position lors des réglages en position axiale de celui-ci.

2. Agencement de planche de bord de véhicule automobile selon la revendication 1, **caractérisé en ce que** les moyens d'articulation du bloc formant combiné d'instrumentation (1) sur le reste de la structure de la planche comportent une patte d'articulation (8) dont une extrémité est associée au bloc formant combiné d'instrumentation (1) et dont une extrémité est associée à une tige d'articulation (11) reliée à une pièce de structure (5) de la planche de bord.

3. Agencement de planche de bord de véhicule automobile selon la revendication 2, **caractérisé en ce que** la pièce de structure est une poutre transversale (5) de renfort de la planche de bord.

4. Agencement de planche de bord de véhicule automobile selon l'une quelconque des revendications précédentes, **caractérisé en ce qu'**il comporte de moyens de sollicitation élastique du bloc formant combiné d'instrumentation contre l'ensemble de colonne.

## Patentansprüche

1. Anordnung des Armaturenbretts eines Kraftfahrzeugs mit einem Block (1), der ein kombiniertes Anzeigegerät für die Fahrzeuginstrumente bildet, und einer Anordnung der Lenksäule des Fahrzeugs, die im Winkel und axial in bezug auf das übrige Armaturenbrett verstellbar ist und damit eine Regelung der Position des Lenkrades ermöglicht, welcher Block (1), der ein kombiniertes Anzeigegerät für die Fahrzeuginstrumente bildet, Gelenkmittel umfaßt, die eine Schwenkung in bezug auf die übrige Armaturenbrettkonstruktion gestattet, **dadurch gekennzeichnet, dass** der Block, der ein kombiniertes Anzeigegerät für die Fahrzeuginstrumente bildet, eine untere Oberfläche (9) aufweist, die einen Anschlag gegenüber einer komplementären Kontakt- und Gleitfläche (10) der Lenksäulenanordnung (2) bildet, so dass es den Winkelbewegungen der Lenksäule während der entsprechenden Einstellung des Lenkrades folgt und während der axialen Regelung der Position feststehend bleibt.

2. Anordnung des Armaturenbretts eines Kraftfahrzeugs gemäß Anspruch 1, **dadurch gekennzeichnet, dass** die Gelenkmittel des Blockes, der ein kombiniertes Anzeigegerät für die Fahrzeuginstrumente bildet, zur Schwenkung gegenüber dem Rest der Struktur des Armaturenbretts eine Schwenkeinrichtung (8) umfaßt, deren eines Ende dem Block zugeordnet ist, der das kombinierte Anzeigegerät für die Fahrzeuginstrumente (1) bildet, und deren eines Ende einer Schwenkachse (11) zugehörig ist, die mit einem Strukturteil des Armaturenbretts verbunden ist.

3. Anordnung des Armaturenbretts eines Kraftfahrzeugs gemäß Anspruch 2, **dadurch gekennzeichnet, dass** das Strukturteil ein Querträger (5) zur Verstärkung des Armaturenbretts ist.

4. Anordnung des Armaturenbretts eines Kraftfahrzeugs gemäß einem der vorhergehenden Ansprüche, **dadurch gekennzeichnet, dass** sie Mittel zur elastischen Beanspruchung des Blockes umfaßt, der das kombinierte Anzeigegerät für die Fahrzeuginstrumente bildet, im Verhältnis zur Anordnung der Lenksäule.

## Claims

1. Dashboard arrangement for motor vehicles of the type comprising a unit (1) forming the instrument panel of the vehicle and a steering column assembly (2) for said vehicle, which is capable of angled and axial displacement in relation to the rest of the dashboard to allow the position of the steering wheel of the vehicle to be adjusted, said unit (1) forming the instrument panel of the vehicle comprising means (8) for pivoting on the rest of the structure of the dashboard, **characterised in that** the unit (1) forming the instrument panel comprises an inside surface (9) forming a support lug on a complementary contact and sliding surface (10) of the steering column assembly (2) to follow the angled displacements thereof during the corresponding adjustments of the steering wheel, while remaining fixed in position during the axial adjustments of the position thereof.

2. Dashboard arrangement for motor vehicles according to Claim 1, **characterised in that** the means for pivoting the unit (1) forming the instrument panel on the rest of the structure of the dashboard comprise a pivot arm (8), of which one end is connected to the unit (1) forming the instrument panel and one end is connected to a pivot rod (11) joined to a structural part (5) of the dashboard.

3. Dashboard arrangement for motor vehicles according to Claim 2, **characterised in that** the structural part is a reinforcing cross beam (5) of the dashboard.

4. Dashboard arrangement for motor vehicles according to any one of the preceding claims, **characterised in that** it comprises means for elastically stressing the unit forming the instrument panel against the steering column assembly.
